**Europäisches Patentamt**

**European Patent Office**

**Office européen des brevets**

(19)

(11) Veröffentlichungsnummer: **0 231 787 B1**

# EUROPÄISCHE PATENTSCHRIFT

(12)

(45) Veröffentlichungstag der Patentschrift: **18.09.91**

(21) Anmeldenummer: **87100509.6**

(22) Anmeldetag: **16.01.87**

(51) Int. Cl.⁵: **C04B 37/00, B32B 18/00, C04B 35/52, C04B 35/54**

Die Akte enthält technische Angaben, die nach dem Eingang der Anmeldung eingereicht wurden und die nicht in dieser Patentschrift enthalten sind.

(54) Verfahren zum Herstellen eines undurchlässigen Kohlenstoff- oder Graphitkörpers.

(30) Priorität: **04.02.86 DE 3603305**

(43) Veröffentlichungstag der Anmeldung:
**12.08.87 Patentblatt 87/33**

(45) Bekanntmachung des Hinweises auf die Patenterteilung:
**18.09.91 Patentblatt 91/38**

(84) Benannte Vertragsstaaten:
**DE FR GB SE**

(56) Entgegenhaltungen:
**DE-A- 1 941 387**
**FR-A- 2 411 703**
**GB-A- 2 169 273**
**US-A- 3 055 789**
**US-A- 4 522 895**

**Winnacker Küchler, Chem. Technologie B3, 1983, S. 299, SIGRATEX GmbH**

(73) Patentinhaber: **SIGRI GmbH**
**Werner-von-Siemens-Strasse 18**
**W-8901 Meitingen(DE)**

(72) Erfinder: **Gruber, Udo**
**von Rehlingenstrasse 48 a**
**W-8901 Neusäss-Westheim(DE)**
Erfinder: **Hingst, Karl., Dipl.-Ing.**
**Ottostrasse 2**
**W-8901 Stadtbergen(DE)**

EP 0 231 787 B1

## Beschreibung

Gegenstand der Erfindung ist ein Verfahren zur Herstellung eines für Fluide undurchlässigen Rohres aus Kohlenstoff oder Graphit bei welchem

- ein mit einem kohlenstoffhaltigen Binder beschichtetes Material aus Kohlenstoffasern und eine fluiddichte Graphitfolie in eine Rohrform gebracht werden,
- der rohrförmige Körper zuerst einer Härtungsbehandlung unterworfen
- und dann carbonisiert oder graphitiert wird.

Zur Herstellung von Kohlenstoff- oder Graphitkörpern werden im wesentlichen aus Kohlenstoff bestehende körnige Füllstoffe, wie Petrolkoks, Anthrazit, Ruß, mit carbonisierbaren Bindern, z.B. Pechen oder Duroplasten, gemischt, aus dem Gemisch durch Strangpressen, Vibrationsformen oder einem anderen in der keramischen Technik üblichen Verfahren zu Körpern geformt und die Körper zur Pyrolyse des Binders einer Wärmebehandlung unterworfen, bei welcher ein die Füllstoffkörper verbindender Koks und flüchtige, aus den Körpern diffundierende Produkte erzeugt werden. Füllstoffe in Faserform, wie Gewebe oder Vliese aus Kohlenstoffasern, werden im allgemeinen mit dem Binder beschichtet, zu überwiegend flächenhaften Gebilden ausgelegt, übereinandergestapelt und als Stapel zur Pyrolyse des Binders erhitzt. Garne werden mit dem Binder imprägniert und zweckmäßig durch Wickeln auf Kernkörper aufgezogen. Die nach der Wärmebehandlung fast vollständig aus Kohlenstoff bestehenden Körper können durch Erhitzen auf eine zweite, höhere Temperatur graphitiert werden.

Die nach diesem Verfahren hergestellten Kohlenstoff- und Graphitkörper sind porös und durchlässig für Flüssigkeiten und Gase. Man imprägniert deshalb die Körper mit vorzugsweise Duroplasten, wenn für bestimmte Anwendungszwecke, z.B. für Chemieapparate, eine größere Undurchlässigkeit der Körper nötig ist. Ein Nachteil der imprägnierten Körper ist die vergleichsweise geringe Temperaturbeständigkeit des Imprägniermittels, wodurch die Verwendung der Körper auf Temperaturen bis höchstens etwa 200 °C beschränkt ist. Zur Herstellung von auch bei höheren Temperaturen gegen Fluide undurchlässigen Kohlenstoff- und Graphitkörpern imprägniert man deshalb die Körper mit einem Kunstharz oder Pech, pyrolysiert das Imprägniermittel durch Erhitzen der Körper und wiederholt den Zyklus mehrfach, bis der angestrebte Permeabilitätswert erreicht ist. Grund der Mehrfachimprägnierungen sind die Massenverluste bei der Pyrolyse des Imprägniermittels, die ca. 50 Gew.% betragen. Nach einem anderen Verfahren werden die Poren der Kohlenstoff- und Graphitkörper mit Kohlenstoff gefüllt und verschlossen, der bei hoher Temperatur aus Kohlenwasserstoffe enthaltenden Gasgemischen in den Poren abgeschieden wird.

Beide Verfahren sind technisch aufwendig und es ist bereits vorgeschlagen worden, die porösen Kohlenstoff und Graphitkörper mit Graphitfolie abzudichten. Die flexible und für Fluide undurchlässige Graphitfolie wird aus expandierten Graphitpartikeln hergestellt, die durch Zersetzung von Graphiteinlagerungsverbindungen gewonnen werden. Zur Abdichtung des Rohrbodens eines Rohrbündelwärmeaustauschers wird beispielsweise der Boden in mehrere Lagen zerlegt und zwischen je zwei Lagen eine Graphitfolie eingelegt (DE-PS 19 41 387). Bei einem anderen Verfahren wird der aus Kohlenstoffblöcken gebildete Boden einer Aluminiumelektrolysezelle durch Aufkleben von Graphitfolien gegen den schmelzflüssigen Elektrolyten abgedichtet (DE-OS 20 08 215). Auf die äußere Oberfläche der Kohlenstoffkörper aufgebrachte Folien sind nur von begrenztem Nutzen, da diese Folien leicht durch mechanische Einwirkung beschädigt werden und ihre Schutzfunktion einbüßen. In den Körper eingelegte Folien sind gegen Beschädigungen geschützt, diese Lösung ist jedoch aufwendig, da eine zusätzliche Bearbeitung der einzelnen den Körper bildenden Lagen nötig ist.

Aus der französischen Offenlegungsschrift FR 2 411 703 ist ein aus Kohlenstoffilz und Graphitfolie durch Verkleben der Komponenten mit carbonisierbaren Harzen und nachfolgendes Carbonisieren der Harze hergestellter Schichtstoff für die Verwendung als selbst tragendes Isolationsmaterial in Wärmeöfen bekannt. Bei seiner Herstellung wird daher darauf abgezielt, die geringe Dichte und das große Porenvolumen des Filzes zu erhalten. Die mit dem Filz verbundene Graphitfolie befindet sich in der Regel auf der äußeren Oberfläche des Schichtstoffes und hat den Zweck, den Filz vor mechanischen Beschädigungen, vor Abrieb und vor Infiltration mit im Ofenraum befindlichen Fluiden zu schützen und die Wärmestrahlung zu reflektieren. Durch die Graphitfolie erhält der Schichtstoff außerdem eine ausreichende Standfestigkeit. Zur weiteren Erhöhung der Standfestigkeit kann auch zusätzlich zu mindestens einer äußeren Schicht aus Graphitfolie eine zwischen zwei Filzlagen befindliche, innere Graphitfolie eingebracht werden. Aus diesem Material können auch zylindrische Schichtkörper aufgebaut werden. Sie werden jedoch nicht nach einem Wickelverfahren hergestellt. Schichtkörper aus kohlenstoffhaltigem Material und einer Zwischenlage aus fluiddichter Graphitfolie sind auch aus der US-PS 4 522 895 bekannt. Diese Schichtkörper werden als Elektrodensubstrate für Brennstoffzellen verwendet. Die mit der Graphitfolie verbundenen Schichten müssen stark porös sein und enthalten zusätzlich rohrartige Ausnehmungen für die Förderung der Reaktanden. Dementsprechend wird für ihre Herstellung eine Mischung aus Kohlenstoffkurzfasern und Phenolharz, dem noch ein beträchtlicher Anteil eines Porenbildners beigemischt ist, verwendet. Diese Mischung wird in einer Preßform mit einer Graphitfolie belegt und dann durch Pressen und nachfolgendes Aushärten ein erster Körper hergestellt. In einem zweiten Arbeitsgang wird in einer Presse an diesen ersten Körper an die noch freie Seite der Graphitfolie ein ebensolcher oder ähnlicher Körper angepreßt und das so erhaltene Gebilde wieder einer Härtungsbehandlung unterworfen. Nach dem Entformen wird durch Carbonisieren das poröse Elektrodensubstrat mit der Zwischenschicht aus Graphitfolie erhalten. Dieses mehrstufige Arbeitsverfahren ist aufwendig und es können danach keine Rohre hergestellt werden. Ein Verfahren zur Herstellung eines integrierten Kohlenstoffgegenstandes, umfassend Stücke aus kohlenstoffhaltigem Material, zwischen denen durch ein Klebemittel eine flexible Graphitplatte angebracht ist, wird in der britischen Offenlegungsschrift No. 2 169 273 beschrieben. Durch dieses Verfahren ist es möglich, geformte Kohlenstoffkörper, die aus den verschiedensten Rohstoffen hergestellt worden sind und die dementsprechend unterschiedliche thermische Ausdehnungskoeffizienten haben können, miteinander zu verbinden, ohne daß bei der Verarbeitung oder späteren Verwendung Ablösungen in der die Körper verbindenden Schicht auftreten. Die in die verbindende Klebeschicht eingelegte Graphitfolie gleicht die durch die unterschiedlichen Ausdehnungskoeffizienten verursachten Spannungen aus. Die Frage der Fluiddichtung spielt bei den nach diesem Verfahren hergestellten Körpern keine Rolle. Ein wesentliches Merkmal des Verfahrens ist, daß die Kohlenstoffverbundkörper ausschließlich durch Zusammensetzen von größeren Stücken aus gebranntem Kohlenstoff oder aus Graphit und Graphitfolie hergestellt werden. Eine direkte, rationelle Herstellung von Rohren im Sinne der im folgenden beschriebenen Erfindung ist danach nicht möglich.

Der Erfindung liegt die Aufgabe zugrunde, ein Verfahren zur Herstellung eines für Fluide undurchlässigen Kohlenstoff- oder Graphitrohres unter Verwendung von Graphitfolie zu schaffen, bei welchem eine besondere Bearbeitung der Körper entfallen kann und eine Beschädigung der Folie ausgeschlossen wird.

Die Aufgabe wird mit einem Verfahren der eingangs genannten Art dadurch gelöst, daß

- ein endloses Kohlenstoffgarn oder ein Kohlenstoffgewebe mit einem Binder aus der Gruppe der duroplastischen Kunststoffe beschichtet wird,
- eine erste Lage aus dem beschichteten Kohlenstoffgarn oder Kohlenstoffgewebe auf einen der herzustellenden Rohrform angepaßten Kern gewickelt wird,
- diese erste Lage aus beschichtetem Kohlenstoffgarn oder Kohlenstoffgewebe mit einer zweiten Lage aus fluiddichter Graphitfolie vollständig bedeckt wird,
- auf diese zweite Lage aus fluiddichter Graphitfolie eine dritte Lage aus einem mit einem Binder aus der Gruppe der Duroplasten beschichteten Kohlenstoffgarn oder Kohlenstoffgewebe gewickelt wird,
- durch einen Härtungsprozeß stoffschlüssige Verbindungen zwischen der ersten, der zweiten und der dritten Lage hergestellt werden und
- der so erhaltene Körper einer Carbonisierungs- oder Graphitierungsbehandlung unterworfen wird.

Endlose Kohlenstoffgarne oder Kohlenstoffgewebe, z.B. Bänder, werden mit einem carbonisierbaren Binder, vor allem einem Duroplasten oder mit der Lösung eines Duroplasten beschichtet und die beschichteten Garne bzw. Gewebe auf einen Kern gewickelt. Auf die Wickelschicht werden Graphitfolien aufgelegt, die Folien mit einer zweiten Garn- oder Gewebeschicht umwickelt und so fort bis eine vorgegebene Permeabilität erreicht ist.

Erfindungswesentlich beim Aufbau des Rohrkörpers ist, daß beide den Körper begrenzende Schichten aus den textilen Wickelschichten bestehen und die Graphitfolien an keiner Stelle Körperoberfläche sind.

Wenn der Aufbau der Schichten beendet ist, wird der Körper unter Drehen durch eine Wärmebehandlung gehärtet. Nach dem Entfernen des Kernes wird der Rohrkörper zur Pyrolyse des Binders in inerter oder reduzierender Atmosphäre auf etwa 800 bis 1200 °C und gegebenenfalls zur Umwandlung in Graphit auf etwa 2500 bis 3000 °C erhitzt.

Anzahl und Dicke der Kohlenstoffschichten lassen sich in weiten Grenzen dem Verwendungszweck der Kohlenstoffkörper anpassen. Als Graphitfolien zur Abdichtung der Kohlenstoffkörper eignen sich handelsübliche Produkte mit einer Dicke von etwa 0,1 bis 2 mm und einer Rohdichte von etwa 0,8 bis 1,2 g/cm³. Da für die Festigkeit der Körper vor allem die Qualität der stoffschlüssigen Verbindung zwischen den einzelnen Schichten bestimmend ist, verwendet man vorteilhaft Graphitfolien, deren Oberfläche mit regel- oder unregelmäßig angeordneten Eindrücken versehen oder mit einem Kunstharz beschichtet sind oder Profilierungen aufweisen. Gegebenenfalls sind Folien zu verwenden, die mehrere oder alle diese Merkmale haben.

Vorteile des Verfahrens sind die einfache Herstellung von Kohlenstoff- und Graphitrohren, die auch bei hohen Temperaturen für Fluide undurchlässig sind und diese Eigenschaft nicht durch mechanische Beschädigung ihrer Oberfläche einbüßen und die aufgrund des lagenförmigen Aufbaus der Körper einfache Anpassung an spezifische Anforderungen. Die Kohlenstoff- und Graphitrohre eignen sich besonders für solche Anwendungsbedingungen, bei denen kunstharzimprägnierte Rohre nicht brauchbar sind, z.B. für hohe Temperaturen und Verwendungen im Kontakt mit stark korrodierenden Fluiden. Beispiele sind Rohre für Heißgasleitungen, Düsen und Thermoelementschutzrohre.

Die Erfindung wird im folgenden anhand eines Beispieles und einer Zeichnung erläutert.

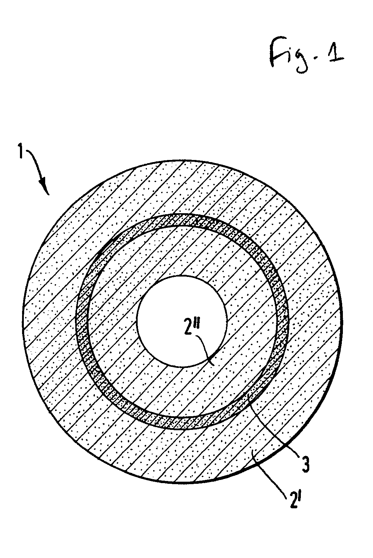

Fig.1 zeigt ein gewickeltes Kohlenstoffrohr im Schnitt.

Beispiel

Mit einer CNC-gesteuerten Wickelmaschine wurden Kohlenstoffaser-Garne mit 12.000 Filamenten unter einer Vorspannung von 10 H auf einen zylindrischen Stahlkern abgelegt. Die Garne waren mit einem handelsüblichen Phenolformaldehyd-Harz imprägniert, der Wickelwinkel betrug $+ 75°$. Nach zehn Lagen, entsprechend einer Dicke des Wickelkörpers von etwa 3 mm wurde das Wickeln unterbrochen, zwei Schichten einer 0,2 mm-starken Graphitfolie faltenfrei aufgezogen und die überlappenden Folienenden mit einem Phenolharz-Kleber miteinander verklebt. Die Rohdichte der Folie betrug etwa 1,0 $g/cm^3$, der Permeabilitätskoeffizient weniger als $10^{-6}$ $cm^2/s$. Unter den bereits beschriebenen Bedingungen wurden nochmals zehn Faserlagen abgelegt und unter Drehen des Wickelkörpers das Phenolformaldehyd-Harz durch Erwärmen gehärtet. Dabei betrug die Aufheizgeschwindigkeit bis 90 °C etwa 70 K/h und von 90 bis 130 °C ca. 80 K/h; die Verweilzeit war ca. 1,5 h.

Das ausgehärtete Rohr wurde vom Kern abgezogen und zur Pyrolyse des Harzbinders in Stickstoff auf 1100 °C erhitzt, mittlere Aufheizgeschwindigkeit unterhalb 600 °C ca. 20 K/h, darüber etwa 60 K/h. Das in Fig. 1 dargestellte Rohr (1) besteht aus einer äußeren Schicht (2') und einer inneren Schicht (2") aus kohlenstoffaserverstärktem Kohlenstoff, zwischen denen Lagen (3) aus gegen Fluide undurchlässiger Graphitfolie eingelegt und mit den porösen Kohlenstoffschichten stoffschlüssig verbunden sind. Der Permeabilitätskoeffizient des Rohrs beträgt $10^{-5}$ $cm^2/s$; faserverstärkte Kohlenstoffrohre gleicher Permeabilität ohne die Folieneinlagen müssen wenigstens dreimal imprägniert und zur Pyrolyse des Imprägniermittels erhitzt werden.

**Patentansprüche**

1. Verfahren zur Herstellung eines für Fluide undurchlässigen Rohres aus Kohlenstoff oder Graphit bei welchem
   - mit einem kohlenstoffhaltigen Binder beschichtetes Material aus Kohlenstoffasern und eine fluiddichte Graphitfolie in eine Rohrform gebracht werden,
   - der rohrförmige Körper zuerst einer Härtungsbehandlung unterworfen
   - und dann carbonisiert oder graphitiert wird,

   dadurch gekennzeichnet, daß
   - ein endloses Kohlenstoffgarn oder ein Kohlenstoffgewebe mit einem Binder aus der Gruppe der duroplastischen Kunststoffe beschichtet wird
   - eine erste Lage aus dem beschichteten Kohlenstoffgarn oder Kohlenstoffgewebe auf einen der herzustellenden Rohrform angepaßten Kern gewickelt wird
   - diese erste Lage aus beschichtetem Kohlenstoffgarn oder Kohlenstoffgewebe mit einer zweiten Lage aus fluiddichter Graphitfolie vollständig bedeckt wird
   - auf diese zweite Lage aus fluiddichter Graphitfolie eine dritte Lage aus einem mit einem Binder aus der Gruppe der Duroplasten beschichteten Kohlenstoffgarn oder Kohlenstoffgewebe gewickelt wird
   - durch einen Härtungsprozeß stoffschlüssige Verbindungen zwischen der ersten, der zweiten und der dritten Lage hergestellt werden und
   - der so erhaltene Körper einer Carbonisierungs- oder Graphitierungsbehandlung unterworfen wird.

2. Verfahren nach Patentanspruch 1,
   dadurch gekennzeichnet, daß
   mehr als eine Abfolge von Lagen aus beschichtetem Kohlenstoffgarn oder Kohlenstoffgewebe und Graphitfolie aufgewickelt werden.

3. Verfahren nach den Patentansprüchen 1 und 2,
   dadurch gekennzeichnet, daß
   bei dem Aufbringen der Lage(n) aus Graphitfolie mehr als eine Schicht Graphitfolien übereinander gelegt werden.

4. Verfahren nach den Patentansprüchen 1 bis 3,
   dadurch gekennzeichnet, daß
   die Graphitfolie vor dem Auflegen mit einem Kunstharzkleber bestrichen wird.

5. Verfahren nach den Patentansprüchen 1 bis 4,
   dadurch gekennzeichnet, daß
   eine mit Phenolformaldehydharz beschichtete Graphitfolie verwendet wird.

6. Verfahren nach den Patentansprüchen 1 bis 3, dadurch gekennzeichnet, daß eine Graphitfolie mit einer Dicke von 0,1 bis 2 mm verwendet wird.

7. Verfahren nach den Patentansprüchen 1 bis 3, dadurch gekennzeichnet, daß eine Graphitfolie mit einer Rohdichte von 0,8 bis 1,2 g/cm³ verwendet wird.

## Claims

1. Process for the production of a tube formed of carbon or graphite which cannot be penetrated by fluid in which
   - a material formed from carbon fibres which is coated with a carbon-containing binder and a fluid-tight graphite foil are brought into a tubular mould,
   - the tubular body is first subjected to a hardening treatment
   - and then it is carbonized or graphitised,

   **characterised in that**
   - a continuous carbon yarn or a carbon fabric is coated with a binder from the thermosetting plastics group,
   - a first layer formed from the coated carbon yarn or carbon fabric is wrapped on a core matched to the tube shape to be produced,
   - this first layer of coated carbon yarn or carbon fabric is covered completely by a second layer of fluid-tight graphite foil,
   - a third layer of carbon yarn or carbon fabric coated with a thermosetting resin binder is wound on this second layer of fluid-tight graphite foil,
   - intimate connections between the first, the second and the third layers are produced by means of a hardening process, and
   - the body so obtained is subjected to a carbonizing or graphitising treatment.

2. A process according to claim 1, **characterized in that,** more than one sequence of layers of coated carbon yarn or carbon fabric and graphite foil are wound on.

3. A process according to claims 1 and 2, **characterized in that,** in the application of the layer(s) of graphite foil, more than one layer of graphite foils are laid on one another.

4. A process according to claims 1 to 3, **characterized in that,** the graphite foil is coated with a synthetic resin adhesive before application.

5. A process according to claims 1 to 4, **characterized in that,** a graphite foil coated with phenol formaldehyde resin is used.

6. A process according to claims 1 to 3, **characterized in that,** a graphite foil with a thickness of 0.1 to 2 mm is used.

7. A process according to claims 1 to 3, **characterized in that,** a graphite foil with a bulk density of 0.8 to 1.2 g/cm³ is used.

## Revendications

1. Procédé de fabrication d'un tube imperméable aux fluides, en carbone ou graphite dans lequel
   - on met en forme tubulaire un matériau de fibres de carbone revêtu de liant comprenant du carbone et un film de graphite étanche aux fluides,
   - on soumet d'abord le corps tubulaire à un traitement de durcissement,
   - ensuite on carbonise ou graphitise

   caractérisé en ce que :
   - on enduit un filament de carbone sans fin ou un tissu de carbone d'un liant du groupe des matières plastiques thermodurcissables,
   - on bobine une première couche de filament de carbone, ou de tissu de carbone enduite, sur un noyau correspondant à la forme du tube à produire,
   - on recouvre entièrement la première couche de filament de carbone ou de tissu de carbone enduite d'une deuxième couche en film de graphite étanche aux fluides,
   - sur cette deuxième couche en film de graphite étanche aux fluides, on bobine une troisième couche de filament de carbone ou tissu de carbone enduit d'un liant du groupe des thermodurcissables,
   - grâce à un processus de durcissement, on obtient des liaisons par le matériau entre la première, la deuxième et la troisième couche, et
   - on soumet le corps ainsi obtenu à un traitement de carbonisation ou de graphitisation.

2. Procédé selon la revendication 1, caractérisé en ce qu'on bobine plus d'une série de couches de filament de carbone ou de tissu de carbone et de film de graphite.

3. Procédé selon les revendications 1 et 2, caractérisé en ce que lors du dépôt de la ou des couches de films de graphite, on dépose l'une sur l'autre plus d'une couche de film de graphite.

4. Procédé selon les revendications 1 à 3,' caractérisé en ce qu'on enduit le film de graphite d'un adhésif de résine synthétique avant sa mise en place.

5. Procédé selon les revendications 1 à 4, caractérisé en ce qu'on utilise un film de graphite enduit de résine phénolformaldéhyde.

6. Procédé selon les revendications 1 à 3, caractérisé en ce qu on utilise un film de graphite d'une épaisseur de 0,1 à 2 mm.

7. Procédé selon les revendications 1 à 3, caractérisé en ce qu'on utilise un film de graphite d'une densité brute de 0,8 à 1,2 g/cm$^3$.

Fig. 1